# EUROPÄISCHE PATENTANMELDUNG

(11) **EP 2 565 421 A2**
(43) Veröffentlichungstag der Anmeldung: **06.03.2013**
(21) Anmeldenummer: 12181548.4
(22) Anmeldetag: 23.08.2012
(51) Int. Cl.: F02C 7/32, F01D 15/10

(54) **Hilfsgerätegetriebeeinrichtung mit einem Generator für ein Triebwerk**

(30) Priorität: 02.09.2011 DE 102011112252
(71) Anmelder: Rolls-Royce Deutschland Ltd & Co KG, 15827 Blankenfelde-Mahlow (DE)
(72) Erfinder: Beier, Jürgen, 15732 Schulzendorf (DE); Braun, Sören, 15738 Zeuthen (DE)
(74) Vertreter: Kronthaler, Wolfgang N.K.

(57) **Zusammenfassung**

Es wird ein Generator zur Anordnung auf einer Welle (13) einer Hilfsgerätegetriebeeinrichtung (9) eines Triebwerks mit einem Stator (25) und einem mit einer Welle (13) der Hilfsgerätegetriebeeinrichtung (9) des Triebwerks (1) koppelbaren und gegenüber dem Stator (25) drehbar gelagerten Rotor (23) vorgeschlagen, wobei ein den Stator (25) aufnehmender Statorbereich (28) gegenüber einem den Rotor (23) aufnehmenden Rotorbereich (27) trennbar ist. Der Rotor (23) ist im Rotorbereich (27) mit Kühlmedium beaufschlagbar. Weiterhin wird eine Hilfsgerätegetriebeeinrichtung (9) eines Triebwerks mit einer mit einer Hauptwelle des Triebwerks wirkverbindbaren Antriebswelle (13) und wenigstens einem auf einer Welle (13) der Hilfsgerätegetriebeeinrichtung (9) mit einem derartigen Generator (12) vorgeschlagen.

## Beschreibung

Die Erfindung betrifft einen Generator zur Anordnung auf einer Welle einer Hilfsgerätegetriebeeinrichtung gemäß der im Oberbegriff des Patentanspruches 1 näher definierten Art und eine Hilfsgerätegetriebeeinrichtung gemäß der im Patentanspruch 12 näher definierten Art.

Aus der Praxis sind Generatoren, beispielsweise so genannte Permanent Magnet Alternators (PMAs), bekannt, welche als unabhängige Stromquelle für eine Stromversorgung einer Triebwerksregelung eingesetzt werden. Die Generatoren sind einer Hilfsgerätegetriebeeinrichtung zugeordnet und weisen einen von einer Welle der Hilfsgerätegetriebeeinrichtung angetriebenen und mit dieser drehbaren Rotor und einen unbeweglichen Stator auf. Der Generator wird über ein den Stator haltendes Gehäuse beispielsweise über Bolzenverbindungen an ein Gehäuse der Hilfsgerätegetriebeeinrichtung angebunden.

Im Betrieb des Triebwerks wird die Welle, auf der der Generator angeordnet ist, mit hohen Drehzahlen angetrieben. Hier entstehen bei der Stromerzeugung hohe Temperaturen im Bereich eines Stators des Generators. Um eine Funktionsfähigkeit des Generators sicherzustellen, muss die Wärmeenergie von dem Generator abgeführt werden. Dies geschieht einerseits im Bereich eines Statorgehäuses durch Wärmeaustausch mit der Umgebung, was jedoch keine ausreichende Kühlung darstellt. Andererseits wird der Generator auch im Bereich einer Welle gekühlt. Die Welle ist hierzu als Hohlwelle ausgeführt und wird beispielsweise im Inneren über eine Öldüse mit einer Kühlflüssigkeit durchströmt.

Die im Bereich der Welle zusätzlich vorgesehene Kühlung ist nachteilhafterweise auch nicht ausreichend, um den Generator in seinem optimalen Temperaturbereich betreiben zu können. Dies resultiert daraus, dass die Wärmeentwicklung des Generators im Bereich des Stators am größten ist und die Kühlung über die Hohlwelle mit zu großem Abstand zum Statorbereich erfolgt.

Weiterhin sind Generatoren im Triebwerksbau bekannt, welche zur Stromversorgung eines gesamten Flugzeugs ausgebildet und entsprechend groß dimensioniert sind. Um hier eine ausreichende Kühlwirkung zu erzielen, weisen diese Generatoren einen integrierten Kühlkreislauf auf, über welchen die insbesondere im Bereich des Stators entstehende Wärme abgeführt werden kann. Der Kühlkreislauf umfasst dabei Leitungen, welche unter anderem durch den Stator verlaufen. Durch die Nähe der Kühlung zu der Wärmequelle ist diese sehr effektiv. Allerdings ist der Aufbau eines derartigen Kühlkreislaufes sehr komplex und entsprechend kostenintensiv umzusetzen.

Der vorliegenden Erfindung liegt daher die Aufgabe zugrunde, einen konstruktiv einfachen und effektiv temperierbaren Generator zur Anordnung auf einer Welle einer Hilfsgerätegetriebeeinrichtung eines Triebwerks und eine Hilfsgerätegetriebeeinrichtung mit einem solchen Generator zu schaffen.

Erfindungsgemäß wird diese Aufgabe mit einem Generator mit den Merkmalen des Patentanspruches 1 bzw. mit einer Hilfsgerätegetriebeeinrichtung mit den Merkmalen des Patentanspruches 12 gelöst.

Ein erfindungsgemäß ausgebildeter Generator zur Anordnung auf einer Welle einer Hilfsgerätegetriebeeinrichtung eines Triebwerks ist mit einem Stator und einem mit einer Welle der Hilfsgerätegetriebeeinrichtung des Triebwerks koppelbaren und gegenüber dem Stator drehbar gelagerten Rotor ausgebildet. Erfindungsgemäß wird vorgeschlagen, dass ein den Stator aufnehmender Statorbereich gegenüber einem den Rotor aufnehmenden Rotorbereich trennbar ist, wobei der Rotor im Rotorbereich mit Kühlmedium beaufschlagbar ist.

Dadurch, dass die Kühlung des Generators nahe des Stators mit Kühlmedium durchführbar ist, ist der erfindungsgemäße Generator im Vergleich zu aus der Praxis bekannten Lösungen effektiver temperierbar bzw. kühlbar und somit wenigstens annähernd über den gesamten Betriebsbereich in seinem optimalen Temperaturbereich betreibbar. Damit ist über den erfindungsgemäßen Generator jederzeit eine gewünschte Leistung zur Verfügung stellbar. Darüber hinaus ist eine Lebensdauer des Generators aufgrund der geringeren Temperaturbelastungen gegenüber bekannten Lösungen höher.

Bei dem erfindungsgemäßen Generator ist eine eine effektive Kühlung ermöglichende Umspülung des Rotors mit dem Kühlmedium in axialer Richtung des Generators realisierbar, die mit einem gewünschten Strömungsprofil bei gleichzeitig geringen Strömungsverlusten darstellbar ist.

Aufgrund der Trennung des Statorbereiches von dem Rotorbereich kann auf konstruktiv aufwändige und hohe Herstellkosten verursachende Leitungen, wie sie bei separaten Kühlkreisläufen verwendet werden, verzichtet werden.

Eine vollständige Abdichtung des einen Trockenraum darstellenden Statorbereichs gegenüber dem einen Nassbereich darstellenden Rotorbereich ist mit einfachen Mitteln möglich, wohingegen bei bekannten Generatoren durch die zur Abtrennung des Trockenraums vorgesehenen Ölabscheider geringe Mengen an Öl eintreten können. Durch die erfindungsgemäße Separierung des Rotorbereichs von dem Statorbereich bzw. die Kapselung des Statorbereichs wird vorteilhafterweise sichergestellt, dass das Kühlmedium nicht in Kontakt mit elektrischen Komponenten des Statorbereich tritt.

Ist der Rotor aus einem Material hergestellt, welches unter dem Umgebungseinfluss zu Korrosion neigt, ist der Rotor im Betrieb des Generators durch die Auswahl eines geeigneten Kühlmediums einer geringeren Korrosion ausgesetzt.

Der Generator kann beispielsweise zur Stromversorgung einer Triebwerksregelung oder zur Stromversorgung eines gesamten Flugzeugs mit einer dem jeweiligen Anwendungsfall entsprechenden Dimensionierung ausgebildet sein.

Bei einer konstruktiv einfachen Ausführung des erfindungsgemäßen Generators ist zur Trennung des Statorbereichs von dem Rotorbereich ein zwischen Stator und Rotor verlaufendes Trennelement vorgesehen. Da das Trennelement keine zusätzlichen einem Strukturbauteil immanente Funktionen zur Verfügung zu stellen hat, ist dieses mit geringen Abmessungen ausführbar. Das Trennelement kann folglich sehr dünn ausgebildet werden, so dass ein Abstand zwischen dem Stator und dem Rotor, welcher für die Effektivität des Generators eine entscheidende Rolle spielt, sehr klein gehalten werden kann. Eventuelle Verluste durch den gegenüber herkömmlichen Generatoren durch das Trennelement nur geringfügig vergrößerten Abstand zwischen dem Rotor und dem Stator des Generators können gegebenenfalls durch eine geringe Erhöhung einer Magnetfeldstärke oder durch die Erhöhung der Rotordrehzahl im Vergleich zu einem herkömmlichen Generator ohne Trennelement auf einfache Weise ausgeglichen werden.

Um einen Einfluss des Trennelements auf einen Wirkungsgrad des Generators so gering wie möglich zu halten, ist das Trennelement bei einer vorteilhaften Ausführung der Erfindung mit einem nicht-magnetischen Material ausgebildet.

Das Trennelement ist bei einer konstruktiv einfachen Ausführung des erfindungsgemäßen Generators als separates Bauteil ausgebildet, welches über Befestigungselemente mit einem Gehäuse, insbesondere einem Statorgehäuse des Generators verbindbar ist. Ein Material des Trennelements kann bei dieser Ausführung vorteilhafterweise unabhängig von einem Material des Gehäuses gewählt werden. Das Trennelement kann beispielsweise über Bolzen, Schrauben oder ähnliches an dem Gehäuse festgelegt werden.

Bei einer hierzu alternativen Ausführung der Erfindung ist das Trennelement integral mit einem Gehäuse des Generators gebildet, so dass im Unterschied zu der von dem Gehäuse separaten Ausbildung des Trennelements keine Befestigungselemente zur Anbindung des Trennelements an dem Gehäuse vorzusehen sind.

Der Generator weist bei einer vorteilhaften Ausführung der Erfindung eine Kühleinrichtung auf, welche den Rotorbereich des Generators mit dem Kühlmedium versorgt. Alternativ hierzu weist der Generator lediglich Anschlüsse zur Führung des Kühlmediums auf, welche insbesondere an ein Kühlsystem der Hilfsgerätegetriebeeinrichtung oder des gesamten Triebwerks koppelbar sind.

Um eine Austauschbarkeit zumindest der wartungsintensiveren Bauteile des Generators auf einfache Weise zu ermöglichen, kann zumindest ein Gehäuse des Generators und der Stator lösbar von der Welle ausgebildet sein, wobei das Gehäuse des Generators und der Stator hierzu in Umfangsrichtung wenigstens zweiteilig ausgebildet sind. Zusätzlich hierzu können auch das Trennelement und gegebenenfalls der Rotor ebenfalls in analoger Weise geteilt und mit dem Gehäuse des Generators und dem Stator von der jeweiligen Welle lösbar ausgebildet sein. Durch diese Maßnahme ist der Generator, zumindest die lösbaren Teile des Generators, bei einer Anordnung auf diversen Wellen der Hilfsgerätegetriebeeinrichtung beispielsweise zu Reparatur - und Wartungsarbeiten einfach und schnell von der Welle lösbar bzw. auf der Welle anordenbar.

Der Generator ist bei einer konstruktiv einfachen Ausführung der Erfindung zweiteilig ausgebildet, wobei die beiden Teile einerseits mit einer Gelenkverbindung miteinander gekoppelt und andererseits über eine Verschlussverbindung zur Festlegung auf einer Welle der Hilfsgerätegetriebeeinrichtung miteinander verbindbar sind. Ein Austausch der Teile des Generators mittels einer derartigen manschettenartigen Scharnier-Verschluss-Verbindung ist besonders einfach möglich.

Alternativ oder zusätzlich hierzu können die Teile des Generators mittels wenigstens einer das Gehäuse des Generators umfangsseitig umgreifenden Befestigungseinrichtung auf einer Welle der Hilfsgerätegetriebeeinrichtung festgelegt werden. Die Befestigungseinrichtung kann insbesondere einen Schnellverschluss darstellen und beispielsweise als so genannte V-Band-Schelle ausgebildet sein. Die austauschbaren Teile des Generators können hierdurch völlig getrennt voneinander sein.

Der erfindungsgemäße Generator kann zur Anordnung im Bereich eines Endabschnitts einer Welle der Hilfsgerätegetriebeeinrichtung des Triebwerks ausgebildet sein, wobei der Endabschnitt der Welle vollständig in einem Gehäuse des Generators angeordnet ist. Diese Ausbildung des Generators ist beispielsweise für die Anordnung des Generators auf einer eigens für den Generator vorgesehenen Welle der Hilfsgerätegetriebeeinrichtung vorgesehen.

In einer hierzu alternativen Ausführung der Erfindung ist der Generator zur Anordnung auf einer im Bereich des Generators durchgängigen Welle der Hilfsgerätegetriebeeinrichtung des Triebwerks ausgebildet. Diese Ausführung des Generators ermöglicht seine Anordnung insbesondere auch auf Wellen, auf welchen zusätzlich andere Aggregate angeordnet sind. Bei entsprechender Ausbildung des Generators ist dieser von der durchgängigen Welle insbesondere zu Reparatur und Wartungsarbeiten leicht lösbar. Der Generator kann über sein Gehäuse an benachbarten Gehäusen der Hilfsgerätegetriebeeinrichtung angebunden werden.

Die erfindungsgemäße Hilfsgerätegetriebeeinrichtung eines Triebwerks ist mit einer mit einer Hauptwelle des Triebwerks wirkverbindbaren Antriebswelle und wenigstens einem auf einer Welle der Hilfsgerätegetriebeeinrichtung angeordneten erfindungsgemäßen Generator ausgebildet. Die Hilfsgerätegetriebeeinrichtung weist einen konstruktiv einfach aufgebauten Generator auf, der auf effektive Weise temperierbar ist. Dies resultiert daraus, dass der Generator in einem Bereich nahe des Stators mit Kühlmedium beaufschlagt wird, in dem Bereich die größte Wärmeentwicklung stattfindet.

Bei einer vorteilhaften Ausführung einer erfindungsgemäßen Hilfsgerätegetriebeeinrichtung ist ein Gehäuse der Hilfsgerätegetriebeeinrichtung, insbesondere ein Gehäuse einer Antriebswelle, welches zu dem auf der Welle angeordneten Generator benachbart ist, einstückig mit dem Trennelement des Generators ausgeführt.

Der Generator kann bei einer erfindungsgemäßen Hilfsgerätegetriebeeinrichtung auf sämtlichen Wellen der Hilfsgerätegetriebeeinrichtung angeordnet werden. Insbesondere vorteilhaft ist es, wenn der Generator auf einer Welle im Bereich eines Zwischengehäuses des Triebwerks oder auf einer Welle im Bereich eines in radialer Richtung außerhalb eines Nebenstromkanals angeordneten Gehäuses des Triebwerks angeordnet ist.

Die Hilfsgerätegetriebeeinrichtung weist bei einer vorteilhaften Ausführung der Erfindung eine Kühleinrichtung auf, welche den Rotorbereich des Generators mit dem Kühlmedium versorgt. Die Kühleinrichtung kann Bestandteil des Generators sein oder lediglich zur Versorgung des Generators mit dem Kühlmedium ausgebildet sein.

Sowohl die in den Patentansprüchen angegebenen Merkmale als auch die in den nachfolgenden Ausführungsbeispielen des erfindungsgemäßen Generators bzw. der erfindungsgemäßen Hilfsgerätegetriebeeinrichtung angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen des erfindungsgemäßen Generators bzw. der erfindungsgemäßen Hilfsgerätegetriebeeinrichtung ergeben sich aus den Patentansprüchen und den nachfolgend unter Bezugnahme auf die Zeichnung prinzipmäßig beschriebenen Ausführungsbeispielen.

Es zeigt:
- Fig. 1: eine stark schematisierte Längsschnittansicht eines Strahltriebwerkes mit einer im Wesentlichen in radialer Richtung außerhalb eines Nebenstromkanals des Strahltriebwerks angeordneten Hilfsgerätegetriebeeinrichtung, welche einen im Bereich eines Zwischengehäuses des Strahltriebwerks angeordneten Generator aufweist;
- Fig. 2: eine stark schematisierte Längsschnittansicht des Strahltriebwerks der Fig. 1 mit einer im Wesentlichen im Bereich des Zwischengehäuses des Strahltriebwerks angeordneten Hilfsgerätegetriebeeinrichtung, wobei ein Generator im Bereich einer Antriebswelle der Hilfsgerätegetriebeeinrichtung angeordnet ist;
- Fig. 3: eine der Fig. 2 entsprechende Darstellung eines Strahltriebwerks mit einer im Wesentlichen im Bereich des Zwischengehäuses des Strahltriebwerks angeordneten Hilfsgerätegetriebeeinrichtung, wobei ein Generator an einer alternativen Position der Antriebswelle der Hilfsgerätegetriebeeinrichtung angeordnet ist;
- Fig. 4: eine vereinfachte Darstellung eines Bereiches des auf einer Welle der Hilfsgerätegetriebeeinrichtung angeordneten Generators gemäß den Fig. 1 bis 3 mit einem einen Statorbereich von einem Rotorbereich trennenden Trennelement;
- Fig. 5: eine vereinfachte Schnittdarstellung eines Ausschnitts des Generators der Fig. 4 mit einem benachbarten Gehäuse, wobei eine Befestigungseinrichtung zur Festlegung eines Gehäuses des Generators an dem benachbarten Gehäuse ersichtlich ist;
- Fig. 6: eine Querschnittansicht durch einen in axialer Richtung mittleren Bereich des Generators der Fig. 4, wobei eine Teilung des Generators in Umfangsrichtung gezeigt ist; und

- Fig. 7: eine vereinfachte Darstellung eines alternativ ausgebildeten Generators, welcher auf einer einen Endbereich aufweisenden Welle der Hilfsgerätegetriebeeinrichtung angeordnet ist.

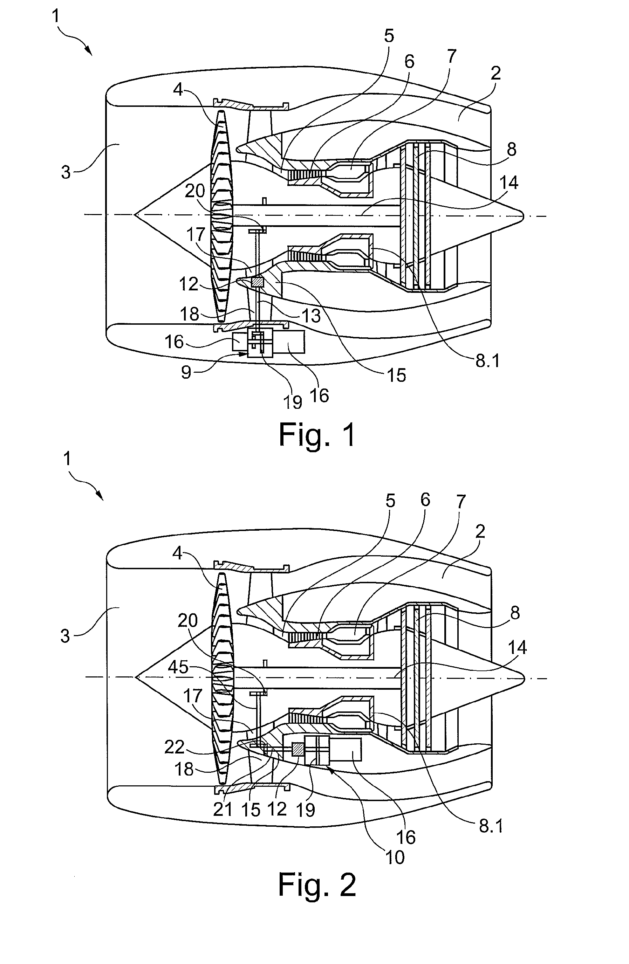

In den Fig. 1 bis 3 ist ein Strahltriebwerk 1 jeweils in einer Längsschnittansicht gezeigt. Das Strahltriebwerk 1 ist mit einem Nebenstromkanal 2 und einem Einlaufbereich 3 ausgebildet, wobei sich an den Einlaufbereich 3 stromab ein Bläser 4 in an sich bekannter Art und Weise anschließt. Wiederum stromab des Bläsers 4 teilt sich der Fluidstrom im Strahltriebwerk 1 in einen Nebenstrom und einen Kernstrom auf, wobei der Nebenstrom durch den Nebenstromkanal 2 und der Kernstrom in einen Triebwerkskern 5 strömt, der wiederum in an sich bekannter Art und Weise mit einer Verdichtereinrichtung 6, einem Brenner 7, einer zum Antrieb des Bläsers 4 vorgesehenen Niederdruckturbine 8 und einer zum Antrieb der Verdichtereinrichtung 6 vorgesehenen Hochdruckturbine 8.1 ausgeführt ist.

In den Fig. 1 bis 3 ist weiterhin jeweils eine schematisch dargestellte Hilfsgerätegetriebeeinrichtung 9, 10, 11 ersichtlich, welche sich hinsichtlich ihres Aufbaus und ihrer Anordnung voneinander unterscheiden.

Die in der Fig. 1 gezeigte Hilfsgerätegetriebeeinrichtung 9 ist im Wesentlichen radial außerhalb des Nebenstromkanals 2 angeordnet und umfasst eine Antriebswelle 13, welche die Hilfsgerätegetriebewellen in der Art eines Seitengetriebes antreibt, und über welche die Hilfsgerätegetriebeeinrichtung 9 mit einer zentralen Triebwerkswelle 14 verbunden ist. Mittels der Antriebswelle 13 sind über Zahnradpaarungen 19 antreibbare Hilfsgerätegetriebewellen antreibbar, auf welchen wiederum verschiedene Nebenaggregate 16, wie beispielsweise eine Brennstoffpumpe, eine Hydraulikpumpe, ein Entlüfter oder ein pneumatischer Starter angeordnet sind.

Zur Anbindung der Antriebswelle 13 der Hilfsgerätegetriebeeinrichtung 9 an die Triebwerkswelle 14 ist vorliegend eine Kegelradverzahnung 20 vorgesehen, über welche die Antriebswelle 13 vorliegend an eine Hochdruckwelle der Triebwerkswelle 14 angebunden ist, welche im Betriebszustand des Strahltriebwerks 1 mit höherer Drehzahl rotiert als eine koaxial dazu angeordnete Niederdruckwelle, an welche der Bläser 4 angebunden ist.

Die Antriebswelle 13 ist vorliegend einstückig ausgebildet und verläuft durch einen so genannten inneren Strut 17, d. h. eine mit einem Hohlprofil ausgebildete Strebe, in im Wesentlichen radialer Richtung von der Triebwerkswelle 14 nach außen hin durch den Triebwerkskern 5 zu einem im Bereich eines zwischen dem Triebwerkskern 5 und dem Nebenstromkanal 2 angeordneten Zwischengehäuse 15 und von dort im Wesentlichen in radialer Richtung durch einen durch den Nebenstromkanal 2 führenden äußeren Strut 18 weiter nach außen hin zu den Hilfsgerätegetriebewellen.

Bei einer alternativen Ausführung kann die Antriebswelle 13 der Hilfsgerätegetriebeeinrichtung 9 auch mehrteilig, mit wenigstens einer Hilfswelle ausgebildet sein, wobei beispielsweise die Hilfswelle mit der Triebwerkswelle 14 koppelbar ist und im Bereich des Zwischengehäuses 15 mit der Antriebswelle 13 zusammenwirkt.

Bei dem in der Fig. 2 gezeigten Ausführungsbeispiel ist die Hilfsgerätegetriebeeinrichtung 10 mit den Hilfsgerätegetriebewellen und den Nebenaggregaten 16 im Wesentlichen im Bereich des Zwischengehäuses 15 angeordnet, wobei eine im Wesentlichen in axialer Richtung verlaufende Antriebwelle 21 der Hilfsgerätegetriebeeinrichtung 10 vorliegend über eine Kegelradverzahnung 22 mit einer Hilfswelle 45 in Wirkverbindung steht. Die Hilfswelle 21 verläuft ausgehend von der Antriebswelle 21 im Bereich des Zwischengehäuses 15 durch den inneren Strut 17 im Wesentlichen in radialer Richtung und ist an ihrem der Antriebswelle 21 abgewandten Ende über eine Kegelradverzahnung 20 mit der Triebwerkswelle 14 gekoppelt.

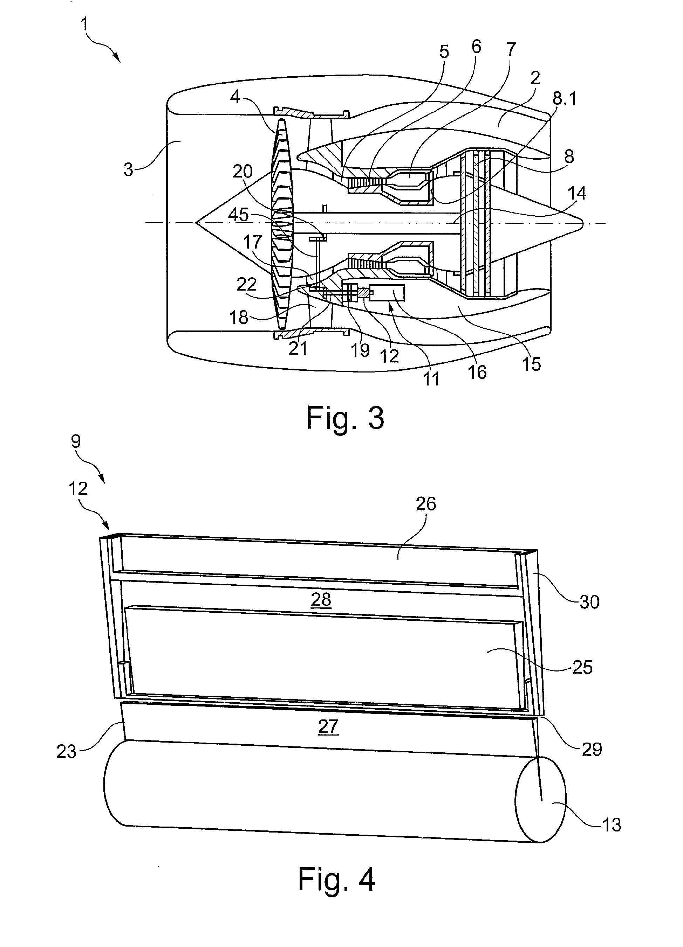

Das in der Fig. 3 gezeigte Ausführungsbeispiel entspricht im Wesentlichen dem in der Fig. 2 gezeigten Ausführungsbeispiel und unterscheidet sich von diesem lediglich in der Anordnung eines Generators 12.

Der Generator 12 der Hilfsgerätegetriebeeinrichtung 9, 10, 11 ist prinzipiell auf jeder Welle der Hilfsgerätegetriebeeinrichtung 9, 10, 11 anordenbar, wobei die in den Fig. 1 bis 3 gezeigten Beispiele nur exemplarisch für eine Vielzahl weiterer Möglichkeiten beschrieben werden. Bei sämtlichen in den Fig. 1 bis 3 gezeigten Ausführungen ist der Generator 12 im Bereich des Zwischengehäuses 15 angeordnet, wobei der Generator 12 beispielsweise bei dem in der Fig. 1 gezeigten Ausführungsbeispiel auch in radialer Richtung außerhalb des Nebenstromkanals 2 oder im Bereich der Struts 17, 18 angeordnet sein kann.

In dem in der Fig. 1 gezeigten Ausführungsbeispiel ist der Generator 12 auf der in radialer Richtung verlaufenden Antriebswelle 13 der Hilfsgerätegetriebeeinrichtung 9 im Bereich des Zwischengehäuses 15 angeordnet. Sowohl bei dem in der Fig. 2 gezeigten als auch bei dem in der Fig. 3 gezeigten Ausführungsbeispiel ist der Generator 12 jeweils auf der im Wesentlichen in axialer Richtung verlaufenden Antriebswelle 21 angeordnet, wobei der Generator 12 bei dem in der Fig. 2 gezeigten Ausführungsbeispiel im Kraftfluss von der Triebwerkswelle 14 aus gesehen vor den Hilfsgerätegetriebewellen mit den Nebenaggregaten 16 und bei dem in der Fig. 3 gezeigten Ausführungsbeispiel nach den Hilfsgerätegetriebewellen mit den Nebenaggregaten 16 angeordnet ist. Insbesondere bei groß dimensionierten Generatoren 12, welche große mechanische Leistungen umsetzen, ist die Anordnung des Generators 12 vor den Hilfsaggregatswellen mit den Nebenaggregaten 16 von Vorteil, da nachfolgenden Hilfsaggregatswellen hierdurch konstruktiv einfacher aufgebaut sein können.

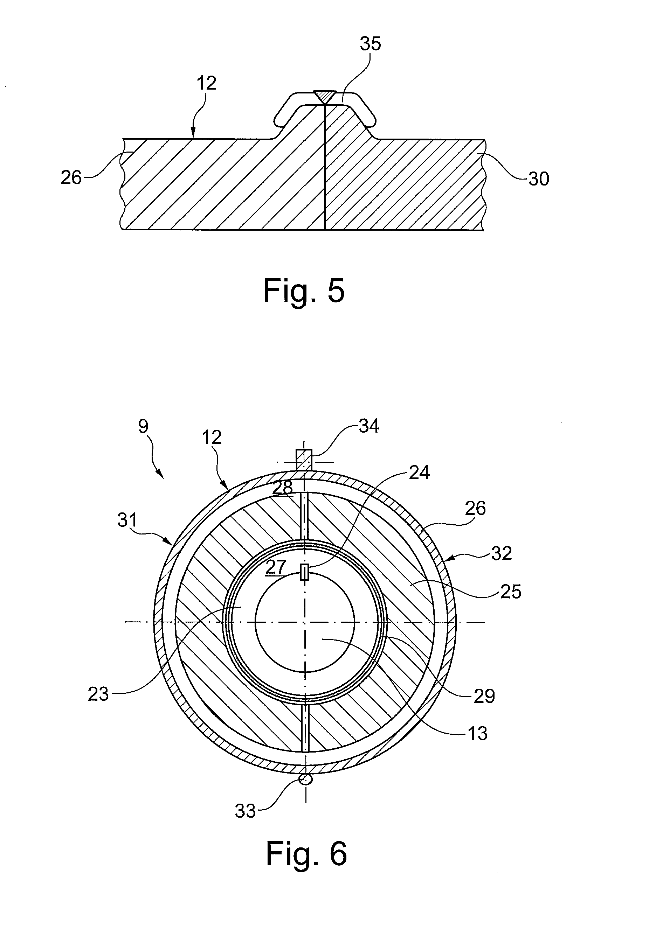

In den Fig. 4 und 6 ist der Generator 12 in vereinfachten Darstellungen näher ersichtlich. Ein Rotor 23 des Generators 12 ist über eine in der Fig. 6 näher ersichtliche Festlegungseinrichtung 24, welche vorliegend als Nut-Feder-Verbindung ausgebildet ist, an der Antriebswelle 13 der Hilfsgerätegetriebeeinrichtung 9 drehfest festgelegt, so dass der Rotor 23 bei einer Drehbewegung der Antriebswelle 13 von dieser mitgedreht wird. Ein Stator 25 des Generators 12 ist fest mit einem Gehäuse 26 des Generators 12 verbunden, so dass bei einer Drehung der Antriebswelle 13 der Rotor 23 gegenüber dem Stator 25 rotiert.

Zwischen einem den Rotor 23 aufnehmenden Rotorbereich 27 und einem den Stator 25 aufnehmenden Statorbereich 28 ist ein eine Gehäuseeinrichtung darstellendes Trennelement 29 angeordnet, durch welches der Stator 25 gegenüber dem Rotor 23 gekapselt wird. Das Trennelement 29 ist aus einem nichtmagnetischem Material ausgebildet, so dass die Funktionsfähigkeit des Generators 12 durch das Trennelement 29 nicht beeinträchtigt wird. Das Trennelement 29 ist vorliegend über nicht näher ersichtliche und beispielsweise als Schrauben, Bolzen oder dergleichen ausgebildete Befestigungselemente mit einem dem Gehäuse 26 des Generators 12 benachbarten Gehäuse 30 der Antriebswelle 13 verbunden.

Da das Trennelement 29 kein Strukturbauteil darstellt, kann eine Dicke des Trennelements 29 in Abhängigkeit von dem gewählten Material sehr klein ausgebildet sein. Ein Spalt zwischen dem Rotor 23 und dem Stator 25 fällt hierdurch sehr gering aus und durch das Trennelement 29 werden lediglich sehr geringe Verluste verursacht.

Der Generator 12 weist eine nicht näher ersichtliche Kühleinrichtung auf, welche den einen Nassbereich darstellenden Rotorbereich 27 mit einem Kühlmedium, insbesondere Öl, versorgt. Durch das Kühlmedium wird im Betriebszustand des Strahltriebwerks 1 im Bereich des Stators 25 entstehende Wärmeenergie von diesem abgeführt. Da das Kühlmittel sehr nah an den einen Trockenraum darstellenden Statorbereich 28 heranreicht, ist die Energieaufnahme durch das Kühlmittel sehr effektiv. Zusätzlich wird durch das Kühlmittel eine Korrosion des Rotors 23 vorteilhafterweise verlangsamt bzw. unterbunden.

Um den Generator 12 auf einfache Weise beispielsweise zu Wartungs- oder Reparaturarbeiten von der Antriebswelle 13 entfernen zu können, ist das Gehäuse 26 des Generators 12 und der Stator 25 in Umfangsrichtung vorliegend zweigeteilt bzw. zweischalig ausgebildet, wobei die beiden Teile 31, 32 einerseits eine als Scharnier 33 ausgebildete Gelenkverbindung und andererseits eine Verschlusseinrichtung 34 aufweisen, so dass die beiden Teile 31, 32 des Generators 12 nach einem Lösen von beispielsweise als Schrauben ausgebildeten Befestigungselementen im Bereich von jeweils einem Teil 31, 32 des Generators 12 zugeordneten Flanschen der Verschlusseinrichtung 34 von der Antriebswelle 13 gelöst werden können.

Das Trennelement 29 und gegebenenfalls der Rotor 23, welcher im Unterschied zu den anderen Bauteilen des Generators 12 nicht sehr fehleranfällig ist, sind vorliegend nicht von der Antriebswelle 13 lösbar. Bei einer alternativen Ausführung der Erfindung können diese ebenfalls in Umfangsrichtung geteilt, Bestandteil der beiden Teile 31, 32 und somit lösbar von der Antriebswelle 13 sein.

Im Bereich der Verschlusseinrichtung 34 und der Gelenkverbindung können Dichtelemente vorgesehen sein.

Um eine Anbindung des Generators 12 an die Antriebswelle 13 zusätzlich zu der manschettenartigen Lösung mit der Gelenk - und Verschlusseinrichtung 33, 34 zu verstärken, kann alternativ oder zusätzlich zu der Gelenk- und Verschlusseinrichtung 33, 34 in einem in axialer Richtung an das Gehäuse 30 der Antriebswelle 13 grenzenden Bereich des Gehäuses 26 des Generators 12 eine in der Fig. 5 ersichtliche und vereinfacht dargestellte Befestigungseinrichtung 35 vorgesehen sein, welche insbesondere als ein Schnellverschluss in Form einer so genannten V-Band-Schelle ausgebildet ist. Eine derartige Befestigungseinrichtung 35 kann in beiden axialen Randbereichen des Generators 12 zur Festlegung an dem Gehäuse 30 der Antriebswelle 13 vorgesehen sein.

Um eine Verdrehsicherung des Gehäuses 26 des Generators 12 gegenüber dem Gehäuse 30 der Antriebswelle 12 zu schaffen, kann im Bereich von Flanschen, in welchen die V-Band-Schelle 35 angeordnet ist, ein Pin, ein Bolzen oder dergleichen angeordnet sein.

Bei einer alternativen Anordnung des Generators auf einer Welle kann die Befestigungseinrichtung zur Festlegung des Gehäuses des Generators an einem im jeweiligen Anwendungsfall an das Gehäuse des Generators grenzenden Bauteil vorgesehen sein.

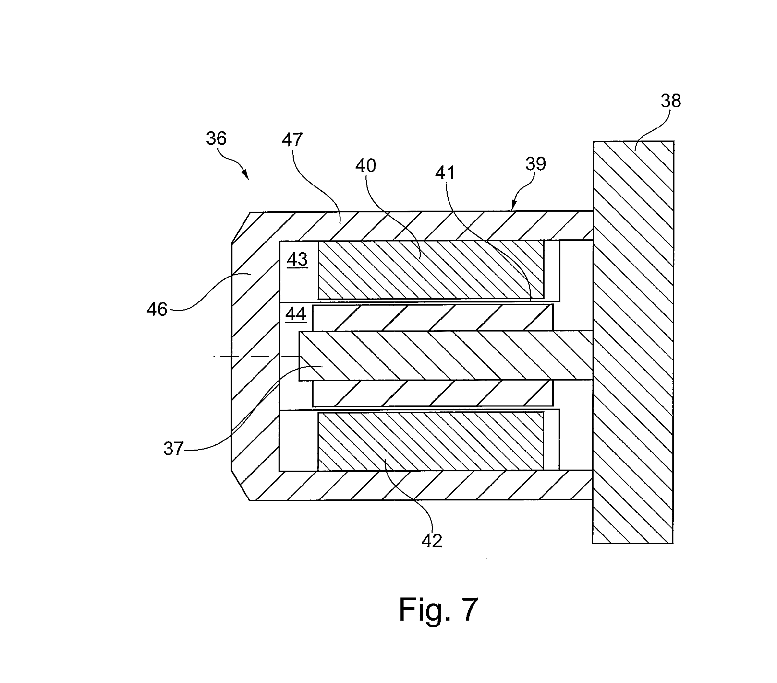

Im Unterschied zu dem in den Fig. 4 und 6 gezeigten Generator 12, welcher auf der im Bereich des Generators 12 durchgängigen Antriebswelle 13 angeordnet ist, ist in der Fig. 7 ein hierzu alternativer Generator 36 gezeigt, welcher im Bereich eines Endbereichs einer Welle 37 anordenbar ist.

Der Generator 36 weist ein vorliegend an ein Gehäuse 38 der Hilfsgerätegetriebeeinrichtung 9 angebundenes Gehäuse 39 auf, und ist mit einem Stator 40, einem Trennelement 41 und einem Rotor 42 ausgebildet, wobei das Trennelement 41 einen den Stator 40 aufnehmenden Statorbereich 43 von einem den Rotor 42 aufnehmenden Rotorbereich 44 trennt. Das Trennelement 41 ist in der Schnittansicht im Wesentlichen L-förmig ausgebildet und einerseits mit einem in radialer Richtung verlaufenden Teil 46 des Gehäuses 39 des Generators und andererseits mit einem in axialer Richtung der Welle 37 verlaufenden Teil 47 des Gehäuses 39 des Generators 36 verbunden. Das Trennelement 41 ist hinsichtlich Material und Befestigung in analoger Weise zu dem in den Fig. 4 und 6 beschriebenen Trennelement 29 aufgebaut.

Das Gehäuse 39, welches den Endbereich der Welle 37 seitlich umläuft, der Stator 40 und das Trennelement 41 können in axialer Richtung von der Welle 37 beispielsweise für Wartungs - oder Reparaturarbeiten durch eine Öffnung einer den Generator 36 an das Gehäuse 38 der Hilfsgerätegetriebeeinrichtung 9 anbindenden und nicht näher ersichtlichen Befestigungseinrichtung gelöst werden. Alternativ hierzu ist auch der Rotor 42 von der Welle 37 lösbar.

### Bezugszeichenliste

- 1: Strahltriebwerk
- 2: Nebenstromkanal
- 3: Einlaufbereich
- 4: Bläser
- 5: Triebwerkskern
- 6: Verdichtereinrichtung
- 7: Brenner
- 8: Niederdruckturbine
- 8.1: Hochdruckturbine
- 9, 10, 11: Hilfsgerätegetriebeeinrichtung
- 12: Generator
- 13: Antriebswelle
- 14: Triebwerkswelle
- 15: Zwischengehäuse
- 16: Nebenaggregat
- 17: innerer Strut
- 18: äußerer Strut
- 19: Zahnradpaarung
- 20: Kegelradverzahnung
- 21: Antriebswelle
- 22: Kegelradverzahnung
- 23: Rotor
- 24: Nut-Feder-Verbindung
- 25: Stator
- 26: Gehäuse des Generators
- 27: Rotorbereich
- 28: Statorbereich
- 29: Trennelement
- 30: Gehäuse der Antriebswelle
- 31, 32: Teil des Generators
- 33: Scharnier
- 34: Verschlusseinrichtung
- 35: Befestigungseinrichtung
- 36: Generator
- 37: Welle
- 38: Gehäuse der Hilfsgerätegetriebeeinrichtung
- 39: Gehäuse des Generators
- 40: Stator
- 41: Trennelement
- 42: Rotor
- 43: Statorbereich
- 44: Rotorbereich
- 45: Hilfswelle

## Patentansprüche

1. Generator zur Anordnung auf einer Welle (13, 21, 37, 45) einer Hilfsgerätegetriebeeinrichtung (9, 10, 11) eines Triebwerks (1) mit einem Stator (25, 40) und einem mit einer Welle (13, 21, 37, 45) der Hilfsgerätegetriebeeinrichtung (9, 10, 11) des Triebwerks (1) koppelbaren und gegenüber dem Stator (25, 40) drehbar gelagerten Rotor (23, 42), **dadurch gekennzeichnet, dass** ein den Stator (25, 40) aufnehmender Statorbereich (28, 43) gegenüber einem den Rotor (23, 42) aufnehmenden Rotorbereich (27, 44) trennbar ist, wobei der Rotor (23, 42) im Rotorbereich (27,44) mit Kühlmedium beaufschlagbar ist.

2. Generator nach Anspruch 1, **dadurch gekennzeichnet, dass** zur Trennung des Statorbereichs (28, 43) von dem Rotorbereich (27, 44) ein zwischen Stator (25, 40) und Rotor (23, 42) verlaufendes Trennelement (29, 41) vorgesehen ist.

3. Generator nach Anspruch 2, **dadurch gekennzeichnet, dass** das Trennelement (29, 41) mit einem nicht-magnetischen Material ausgebildet ist.

4. Generator nach einem der Ansprüche 2 oder 3, **dadurch gekennzeichnet, dass** das Trennelement (29, 41) als separates Bauteil ausgebildet ist, welches über Befestigungselemente mit einem Gehäuse (26, 39) des Generators (12, 36) verbindbar ist.

5. Generator nach einem der Ansprüche 2 oder 3, **dadurch gekennzeichnet, dass** das Trennelement (29, 41) integral mit einem Gehäuse (26, 39) des Generators (12, 36) gebildet ist.

6. Generator nach einem der Ansprüche 1 bis 5, **dadurch gekennzeichnet, dass** eine Kühleinrichtung vorgesehen ist, welche den Rotorbereich (27, 44) des Generators (12, 36) mit dem Kühlmedium versorgt.

7. Generator nach einem der Ansprüche 2 bis 6, **dadurch gekennzeichnet, dass** zumindest ein Gehäuse (26, 39) des Generators (12, 36) und der Stator (25, 40) in Umfangsrichtung wenigstens zweiteilig ausgebildet sind.

8. Generator nach Anspruch 7, **dadurch gekennzeichnet, dass** die zwei Teile (31, 32) des Generators (12, 36) einerseits mit einer Gelenkverbindung (33) miteinander gekoppelt sind und andererseits über eine Verschlussverbindung (34) zur Festlegung auf einer Welle (13, 21, 37, 45) der Hilfsgerätegetriebeeinrichtung (9, 10, 11) miteinander verbindbar sind.

9. Generator nach einem der Ansprüche 7 oder 8, **dadurch gekennzeichnet, dass** die Teile (31, 32) des Generators (12, 36) mittels wenigstens einer das Gehäuse (26, 39) des Generators (12, 36) umfangsseitig umgreifenden Befestigungseinrichtung (35) auf einer Welle (13, 21, 37, 45) der Hilfsgerätegetriebeeinrichtung (9, 10, 11) festlegbar sind.

10. Generator nach einem der Ansprüche 1 bis 9, **dadurch gekennzeichnet, dass** dieser zur Anordnung im Bereich eines Endabschnitts einer Welle (13, 21, 37, 45) der Hilfsgerätegetriebeeinrichtung (9, 10, 11) des Triebwerks (1) ausgebildet ist, wobei der Endabschnitt der Welle (13, 21, 37, 45) vollständig in einem Gehäuse (39) des Generators (36) angeordnet ist.

11. Generator nach einem der Ansprüche 1 bis 9, **dadurch gekennzeichnet, dass** dieser zur Anordnung auf einer im Bereich des Generators (12) durchgängigen Welle (13, 21, 37, 45) der Hilfsgerätegetriebeeinrichtung (9, 10, 11) des Triebwerks (1) ausgebildet ist.

12. Hilfsgerätegetriebeeinrichtung eines Triebwerks (1) mit einer mit einer Hauptwelle (14) des Triebwerks (1) wirkverbindbaren Antriebswelle (13) und wenigstens einem auf einer Welle (13, 21, 37, 45) der Hilfsgerätegetriebeeinrichtung (9, 10, 11) angeordneten Generator (12, 36) nach einem der Ansprüche 1 bis 11.

13. Hilfsgerätegetriebeeinrichtung nach Anspruch 12, **dadurch gekennzeichnet, dass** ein Gehäuse (30) der Hilfsgerätegetriebeeinrichtung (9, 10, 11), insbesondere ein Gehäuse einer Antriebswelle, welches zu dem auf der Welle (13, 21, 37, 45) angeordneten Generator (12) benachbart ist, das Trennelement (29) des Generators (12) ausbildet.

14. Hilfsgerätegetriebeeinrichtung nach einem der Ansprüche 12 oder 13, **dadurch gekennzeichnet, dass** der Generator (12, 36) auf einer Welle (13, 21, 37, 45) der Hilfsgerätegetriebeeinrichtung (9, 10, 11) im Bereich eines Zwischengehäuses (15) des Triebwerks (1) angeordnet ist.

15. Hilfsgerätegetriebeeinrichtung nach einem der Ansprüche 12 oder 13, **dadurch gekennzeichnet, dass** der Generator auf einer Welle (13, 21, 37, 45) der Hilfsgerätegetriebeeinrichtung (9, 10, 11) im Bereich eines in radialer Richtung außerhalb eines Nebenstromkanals (2) angeordneten Gehäuses angeordnet ist.
